# EUROPEAN PATENT APPLICATION

(11) **EP 4 834 549 A1**
(43) Date of publication of application: **04.11.2026**
(21) Application number: 26175725.6
(22) Date of filing: 30.04.2026
(51) Int. Cl.: B26D 5/00, B26D 5/32, B26D 5/34, B26D 7/01, B26D 9/00, B31F 1/08, B26F 1/02, B26F 1/38

(54) **METHOD AND FINISHING SYSTEM FOR FINISHING GRAPHICS SHEETS**

(30) Priority: 02.05.2025 US 202563798660 P; 02.05.2025 DK PA202530271
(71) Applicant: Robotfactory ApS, 8300 Odder (DK)
(72) Inventor: Hansen, Jacob, 8000 Aarhus (DK)
(74) Representative: Medenwaldt, Robin

(57) **Abstract**

Method and finishing system for finishing, such as cutting and creasing, of graphics sheets (2), for example used in production of box packaging or cardboard displays. Initially printed reference markers (23) are read from the graphics side of the graphics sheet (20) by cameras (18), and holes are provided in the graphics sheet (20) in order to provide correspondingly position-correlated marker holes that can be read from the opposite process side and used for precision cutting/creasing in a finishing station (8).

## Description

### FIELD OF THE INVENTION

The present invention relates to a method and a finishing system for finishing graphics sheets, such as cutting and creasing of graphics sheets, for example used in production of box packaging or cardboard displays.

### BACKGROUND OF THE INVENTION

For printed box packaging or cardboard displays, proper creation of folds requires creasing of the flat piece of cardboard from the side opposite of the surface that carries the graphics. Generally, a terminology has been adopted, calling the two opposite sides, respectively, graphic side and process side.

As discussed in detail in WO2005/108027 and the corresponding US2005/247173, not only creasing has to be done from the process side of the sheet, but also cutting of thicker printed sheet material is preferably done in order to obtain a cleaner result. However, precise cutting from the process side, opposite the graphics side, is not an easy task, seeing that the print may be subject to distortion, and the final cutting result in inferior quality of the final cut product due to deviations from the optimum cutting curves. As also discussed in WO2005/108027, various methods exist for precisely calculating the cutting curve on the basis of reference markers, as the reference markers are provided together with the graphics and, accordingly, indicate potential distortion of the graphics. Once, the markers are read, the precise cutting curve is calculated in a computer, and the cutting is performed from the process side after transfer of data from the computer to the cutter. Due to the cutting from the process side, opposite the graphics side, precise orientation of the web is necessary.

Another option are holes in the sheet, as the holes represent through-going markers readable from both sides of the sheet. Web cutting using holes in the sheet as markers is disclosed in JP2013154383A1, US4555968, US2004/226467 and US10016842.

JP2020055078A discloses a finishing system where a graphics sheet with printed markers is placed on a platform with the graphics side upwards and the markers are read with a movable camera. Further, there is provided a system for making holes through the sheet at the position of the read markers. The sheet is then manually turned on the platform, after which recognition members are inserted into the holes for reading with the same camera system. Such a system requires manual work and implies corresponding risk for manual errors.

However, as emphasized in WO2005/108027, providing holes in a sheet has not been regarded as a success but has been found costly and inefficient in practice. For this reason, different printed marker techniques are typically preferred, as also suggested in WO2005/108027. In particular, WO2005/108027 suggests use of reference features, such as edges and corners of the sheet, in order to determine orientation. However, in practice, this is not always a good technical solution. In particular, cardboards having laminated thereon a thin film with graphics tend to have the film extending beyond the edges of the cardboard itself, and the film tends to partially bend around the edges of the cardboard due to the film being thin and flexible, which makes it close to impossible to precisely determine the orientation of the cardboard by automated camera vision on the basis of edges and corners.

As it appears from the above discussion, various techniques exist for how to provide markers for calculations of cutting curves when cutting printed graphics sheets from the process side of the sheet, but there are still problems and challenges, especially, when having thin films with graphics laminated on cardboards or when having thin, flexible webs, which are subject to distortion and bending during turning and transport between different handling stations.

No generally adopted method has become standard, and cutting from the process side opposite the graphics side remains a challenge and still has potential for improvement.

### DESCRIPTION / SUMMARY OF THE INVENTION

It is therefore an objective of the invention to provide an improvement in the art. In particular, it is an objective to provide a simple but reliable automated method and corresponding finishing system for precise finishing, such as cutting and creasing, of graphics sheets from the process side. In particular, it is an object of this invention to provide a method and finishing system for automatically performing finishing process on a graphics sheet, such as cutting and creasing, from the process side.

This objective and further advantages are achieved with a method and finishing system as described below. As it will appear from the discussion, the method and finishing system have a number of advantages, including low-cost, accuracy, speed, quality, and efficiency of the finishing process from the process side.

For clarification, it is pointed out that the term "graphics sheet", as referred to herein, is a sheet of material, for example cardboard, on which graphics with one or more graphics areas have been provided, for example by printing or by gluing a printed paper or film onto the sheet material, such as card-board. The graphics sheet has a "graphics side", which is the side of the sheet on which the graphics have been provided, and a "process side", which is the side opposite the graphics side and from which finishing process, such as cutting and creasing are done. For convenience, the term "sheet" is used in short for graphics sheets, unless otherwise specified.

The sheet comprises printed graphics areas as well as printed reference markers that are related to the graphics areas and for use as position indicators for the finishing, such as cutting and creasing of the sheet.

Such graphics sheets are typically made at a different location than the location where the finishing is done. For example, the sheet is a cardboard sheet provided from a printing facility, where the print is directly applied to the cardboard, or, alternatively, the graphics are provided on a paper, thin cardboard, or polymer film that is then applied to a cardboard or other rigid or semi-rigid material, for example glued or laminated thereon. Then, the graphics sheet is transported from the printing facility to a finishing process facility. Typically, a pile of identical sheets are transported to a sheet storage station close to the finishing station. For example, the sheet storage station is located next to a finishing line, and a robot system and/or belt system or even manual action is used for moving the sheets from the sheet storage station to the finishing station.

A computer system is configured for providing correct data to the finishing station for the finishing process of the graphics sheet. For this purpose, the graphics sheet carries an identifier.

For example, the identifier is a QR code, printed on the graphics side, typically outside the graphics areas. As an alternative to the camera-readable identifier, the identifier may be an electronically readable identifier, for example readable from an RFID tag, and instead of reading it with the camera system, it is read by a corresponding electronic reader.

By reading such identifier and transferring corresponding data to the digitally connected computer system, the computer system can, on the basis of the identifier, identify the corresponding finishing process data for the specific sheet among multiple other finishing process data sets.

The correct finishing process comprises digital data instructions for cutting and/or creasing along one or more finishing curves, which are in unique position-relationship to the printed reference markers. However, as the graphics sheet is processed in the finishing station from the process side and not from the graphics side, as the graphics side is oriented away from the processing tools, the computer system has to potentially modify and provide data for a predetermined finishing process of the graphics sheet from the process side, for example, including mirroring of the finishing curves.

In the system presented herein, in order to provide precise data for the finishing from the process side, the system comprises a marker station in between the storage station and the finishing station. This marker station provides holes in the sheet as substitute markers for the printed reference markers and which, accordingly, can be read from the process side, which is important in order to verify correct orientation of the sheet on the work plane of the finishing station and to achieve precise cutting curves or creasing lines as seen from the process side.

In more detail, the marker station comprises a digital camera system and a hole making system, for example for making holes by punching or drilling. The graphics sheet is moved from the storage station to the marker station and positioned in the marker station with a field-of-view of the camera system towards the graphics side, such that the printed reference markers are within the field-of-view of the camera. The markers are read with the camera so that the position of the markers can be determined with the camera system and sent to the computer system.

Additionally, the identifier is read. If the identifier is electronically readable, such as an RFID tag, this is done with a corresponding electronic reader. If the identifier is printed and visible, the identifier is read with the camera system. It is transferred to the computer for selection of the correct data file with the data for the predetermined finishing process of the specific graphics sheet.

If the identifier is also readable with the camera, the graphics sheet is moved to the marker station and positioned in the marker station with a field-of-view of the camera system towards the graphics side, such that the identifier and the printed reference markers are within the field-of-view of the camera system so that not only the position of the markers can be found but also the identifier can be read with the camera system and sent to the computer system for selection of the correct data file with the data for the predetermined finishing process of the specific graphics sheet.

The positions of the printed reference markers is determined with the camera system, and the so detected positions of the printed reference markers as viewed by the camera system in the marker station are registered in the computer system in relation to the read identifier and in relation to the corresponding data set for the finishing process.

Multiple holes are then created through the sheet by the hole making system of the marker station. The positions of the holes are registered relatively to the positions of the printed reference markers in the computer system. For example, the holes are made at positions at the periphery of the sheet.

In the computer system, on the basis of the determined positions of the printed reference markers and the read identifier, the one or more finishing curves are recalculated and modified into one or more modified finishing curves in unique position-relationship to the holes, so that these can be used in the finishing station, as a substitution for the printed reference markers, for the finishing the graphics sheet from the process side after reading the position of the holes in the finishing station.

Accordingly, the graphics sheet is moved from the marker station to the finishing station with the graphics side resting on the work pane of the finishing station. The position of the holes are determined in the finishing station, which is equipped with a further digital camera system having its field-of-view towards the process side. Due to the unique position-relationship between the holes and the graphics, the finishing process can be performed with high precision from the process side along the one or more modified finishing curves, while the sheet is resting on the work plane of the finishing station with the graphics side facing the work plane. The precise cutting curve and/or creasing lines for the finishing are provided by the computer system on the basis of the reading of the position of the holes in the finishing station. Corresponding digital communication exists between the computer system and the finishing station as already discussed above.

In some embodiments, the marker station comprises a transparent plate, for example glass plate, as s support for the graphics sheet and onto which the graphics sheet is positioned with the graphics facing the transparent plate. The field-of-view of the camera system is towards the graphics side through the transparent plate. Typically, the cameras are positioned below the transparent plate, although, a position beside the transparent plate is also possible if the transparent plate is strongly inclined. Also in this case, the cameras system is provided on the opposite side of the transparent plate as compared to the graphics sheet.

Optionally, the marker station is provided with a frame, the frame comprising a first straight profile and a second straight which form a right angle at their mutual connection point. The sheet, once on the transparent plate, can abut the profiles at their mutual connection point with one of its corners and thus be oriented properly on the glass plate.

If the position of the printed reference markers on the sheets is known, an optional camera system can be used in which multiple stationary cameras are provided, each one having a field-of-view not larger than that the corresponding camera can capture only one of the printed reference markers. This allows relatively small but precise fields-of-view of the cameras.

However, it is also possible to use a camera system with a single camera if the precision is sufficient, for example by having a high number of pixels and good optics.

Since the camera or cameras of the camera system is/are stationary, no precise moving system needs to be installed, which simplifies the system and minimizes costs while at the same time increasing precision in the reading of the printed registration markers. The latter is especially so because the distances between stationary fixed elements, in the present case the camera(s) and hole making tools, can be determined with very high precision in advance. In other words, a simple but highly precise system is provided where both camera(s) and hole making tools in the marker station are stationary, implying that no high-cost translatory system is required, which avoids arms and actuators. The great advantage is that the printed reference markers are imaged with high precision, and since the relative position of the holes is known due to the stationary arrangement of camera(s) and hole making tools, the finishing curves are precisely adjusted, once the positions of the holes have been determined in the finishing station.

In some embodiments, the transparent plate is inclined with the connection point at a position lower that a remaining portion of the transparent plate. If the graphics sheet is moved to and positioned on the transparent plate in the marker station a distance remote from the connection point, gravity may cause sliding of the sheet with one of its corners into the right angle at the connection point. This is a simple means for positioning the sheet in the marker station. Alternatively, however, a robot may be used for automatically positioning the sheet correct in the marker station.

In some embodiments, a sheet storage station is provided in which a pile of graphics sheets is placed with the graphics side downwards. A robot arm with suction cups is gripping one sheet at a time from the top of the pile and moves it from the sheet storage station to the marker station. After the holes have been made in the sheet, the sheet is moved, for example by the same robot arm, from the marker station onto a receiving station on a platform with the graphics side downwards.

From the receiving station, the sheet is moved on the platform, for example on a transportation belt, to the finishing station where the finishing process is performed on the work plane of the finishing station. Optionally, also a belt, potentially the same belt, is used for finally moving the sheet to the removal station where the finished graphics are removed from the removal station.

Advantageously, the finishing station has a finishing area comprising a finishing arm that holds finishing tools and a camera, similar to principles found in X-Y plotters with a straight arm as a translatory rail, where the finishing tools are moving along the arm, when in operation, and the arm is moving in a transverse direction for covering the finishing area.

In some embodiments for increased efficiency, the finishing station has a first and a second finishing area, each of which comprises a finishing arm holding and operating finishing tools, such as creaser wheels and cutters. Advantageously for such configuration, the method comprises providing holes in a first sheet in the marker station and moving the first sheet from the marker station to the receiving station, and then moving the first sheet by the belt from the receiving station to the first finishing area, and further providing holes in a second sheet in the marker station and moving the second graphics sheet from the marker station to the receiving station, and then moving the second sheet by the belt from the receiving station to the first finishing area while simultaneously moving the first sheet from the first finishing area to the second finishing area. Only after having placed both the first and the second sheet on the finishing station and moved them to the corresponding first and second finishing areas, the finishing process of the first sheet is started in the second finishing area and the finishing process of the second sheet is started in the first finishing area.

To summarize for useful embodiments, the finishing system comprises:
- a sheet storage station for storing a graphics sheet prior to finishing, typically, for storing a stack of multiple graphics sheets, for example multiple identical graphic sheets, the sheet storage station comprising a storage support with a support location for the graphics sheet;
- a marker station comprising a hole making system for making multiple holes through the graphics sheet at predetermined positions, for example by punching or drilling, the marker station further comprising a camera system oriented with a field of view towards the support location and arranged for sensing positions of printed reference markers on a graphics side of the graphics sheet,

- a computer system with a database, having stored therein data for a predetermined finishing process of a graphics sheet, the finishing process comprising cutting or creasing or both along one or more finishing curves in unique position-relationship to the printed reference markers on the graphics sheet, wherein the computer system is digitally connected to the camera system of the marker station for receiving and registering positions of the printed reference markers in the computer system, wherein the computer system is programmed for recalculating and modifying the one or more finishing curves into one or more modified finishing curves in unique position-relationship to the positions of the multiple holes made in the graphics sheet by the marker station;
- a finishing station for performing finishing process on the sheet after the marker station, the finishing station is remote from the marker station and comprises a further camera system that is different from the digital camera system and directed with its field-of-view towards the process side and configured for providing positions data for the holes, and digitally connected to the computer system and configured for transferring the position data for the holes to the computer system and for receiving data for the one or more modified finishing curves, and configured for performing the finishing process with the received modified finishing curves. The re-calculation by the computer system of the modified finishing curves also has taken into account the position data of the holes as read by the camera system of the finishing station.

In further useful embodiments of such finishing system, the marker station comprises a transparent plate for receiving the sheet with its graphics side onto the transparent plate, wherein the camera system comprises multiple cameras that are stationary relatively to the transparent plate, wherein the cameras have non-overlapping field-of-views through the transparent plate for sensing the printed reference markers on a graphics side of the graphics sheet; wherein the hole making system comprises one or more hole making tools arranged stationary at predetermined position relatively to the camera system.

Optionally the marker station comprises a frame at the transparent plate, the frame comprising a first straight profile and a second straight profile which form a right angle at their mutual connection point. Advantageously, the transparent plate is inclined with the connection point at a position lower that a remaining portion of the transparent plate, for gravity-induced sliding of the sheet with one of its corners into the right angle at the connection point when placed onto the transparent plate.

As a useful option, the finishing system further comprises a robot with a robot arm, the robot being configured for moving the sheet sequentially from the storage station to the marker station and from the marker station to a transportation belt in a receiving station, wherein the belt is connected to the finishing station for transport of the sheet from the receiving station to the finishing station and further from the finishing station to a removal station from which the finished sheet or portions thereof are removed after finishing.

### SHORT DESCRIPTION OF THE DRAWINGS

The invention will be explained in more detail with reference to the drawing, where
FIG. 1 illustrates a process line for cutting graphics,
FIG. 2A illustrates a frame for providing marker holes in the sheet.
FIG. 2B illustrates a detailed portion of the frame of FIG. 2A,
FIG. 3 illustrates a graphics sheet with markers.

### DETAILED DESCRIPTION / PREFERRED EMBODIMENT

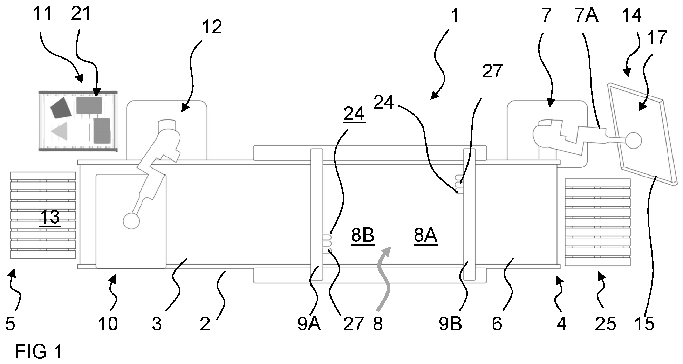

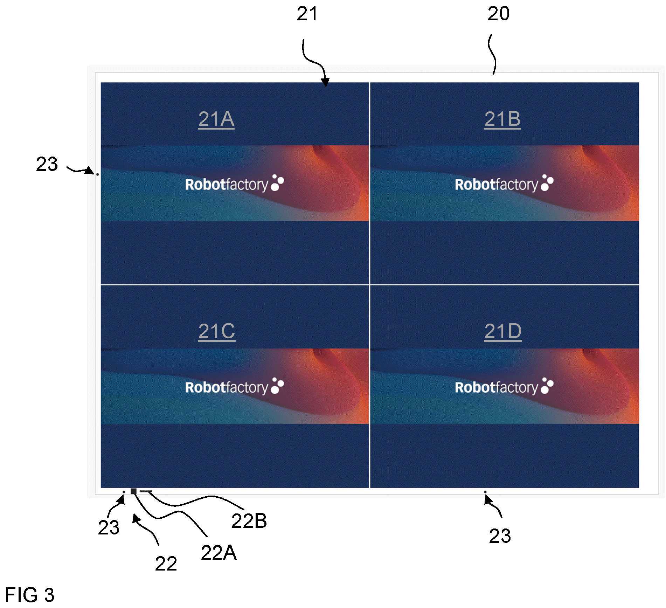

FIG. 1 illustrates a process line 1 for finishing, such as cutting and/or creasing, sheets 20 that have graphics 21 on their one side, which is the graphics side, and which are being processed, for example cut and/or creased, from the opposite side, which is called the process side. See the graphics sheet in more detail in FIG. 3. During the finishing process, the process side is oriented upwards and the graphics side downwards, and the finishing process is done from the process side.

The process line 1 comprises a platform 2, provided with a transportation belt 3 that is moving intermittently on the platform 2 for transport of sheets 20 from a first end 4 to a second 5 of the platform 2. The platform 2 comprise a receiving station 6 at the first end 4 and a removal station 10 at the second end 5 for removal of the cut graphics 21 and the remains, for example, the remains collected in a waste station 13.

At the receiving station 6, sheets 20 are received from a sheet supplier 7. In the present illustration, the sheet supplier is a robot 7 comprising a robot arm 7A that grips the process side of a sheet 20 by suction cups and places one sheet 20, for example as illustrated in FIG. 3, at a time on the receiving station 6 with the graphics side downwards and the process side upwards.

The sheet 20 is transported by the belt 3 into the finishing station 8, which is located on the platform 2 between the receiving station 6 and the removal station 10. In the finishing station 8, cutting and/or creasing is done on the process side.

Instead of a platform 2 with a belt 3 for transport of the sheet 20 and the cut graphics, the stations 6, 8, 10 could be separate, and the sheet moved in a different way than by a belt 3, for example by further robot arms. However, the platform 2 has a general advantage in simple and precise transport of the sheets as well as simple programming of the various sequential movements by the belt 3.

In the shown embodiment, the finishing station 8 can accommodate two sheets 20 at a time, one sheets 20 on a first finishing area 8A and another sheet 20 on a second finishing area 8B. Accordingly, the belt 3 will transport a first sheet 20 from the receiving station 6 into the first finishing area 8A, wait for a second sheet 20 to be placed on the receiving station 6 by the sheet supplier 7, and then transport the first sheet 20 from the first finishing area 8A to the second finishing area 8B, while at the same time transporting the second sheet 20 from the receiving station 6 into the first finishing area 8A.

Prior to reaching the finishing area, holes have been made into the sheets, for example by punching or drilling. These holes have positions related to initial markers on the graphics side and are used to indicate to the finishing system, on the processing side, the position and orientation of the graphics. Accordingly, the holes take the function of reference markers readable from the processing side.

Once, the two finishing areas 8A, 8B have received one sheet each, a procedure starts for reading the position of the holes in the sheet, calculation of precise cutting curves and/or creasing lines, followed by the actual finishing process. For the creasing and/or the cutting procedure, finishing arms 9A, 9B are arranged similar to principles of X-Y plotters. The finishing arms 9A, 9B hold corresponding finishing tools 27 and are moved along and across the finishing areas 8A, 8B by translation of the arms 9A, 9B in a longitudinal direction of the belt 3 and the finishing tools by translation along the arms 9A, 9B.

For the reading of the holes in the sheet, a further camera 24 is provided on the finishing arms 9A, 9B, similar to the finishing tools 27 on the finishing arms 9A, 9B. By translation of the further camera 24 over the graphics sheet 20, the field of view is moving over the sheet 20, and the holes found quickly by the system in automation. As the holes reflect the position of the sheet 20 on the respective finishing area 8A, 8B, and the holes are uniquely related to the graphics on the graphics side, as discussed above, the position of the holes is used by the computer system to transmit the data for the cutting and/or creasing to the finishing arms 9A, 9B.

As an alternative to two finishing areas 8A, 8B, the finishing station 8 may be equipped with only one finishing arm 9 and may only have capacity for one sheet 20 at a time, or it may be equipped with more than two finishing areas 8A, 8B and corresponding finishing arms 9A, 9B for finishing more than two sheets 20 at a time. The principle explained herein is similar, and the system can be extended easily to an arbitrary number of finishing areas 8A, 8B, as desired.

Once, the cutting has been done in the finishing station 8, the belt 3 transports the cut graphics sheet 20 to the removal station 10, where the cut graphics 21 are removed from the belt 3 into an intermediate storage station 11, for example by a robot arm 12, while the waste products are collected in a waste station 13, for example for recycling.

The procedure of the creasing along precise lines and cutting along precise curves, such as bent curves, are now explained in more detail.

Graphics sheets 20 for processing are provided from a sheet storage station 25. In the illustrated embodiment, a simple sheet storage station 25 is used, which is a pile of sheets 20, for example cardboard sheets, having graphics on their graphics side, optionally facing downwards, although it is also possible to provide the graphics side upwards and turn the graphics sheet during movement to subsequent stations. The robot arm 7A has multiple suction cups at its end which attach by suction to the process side of the uppermost sheet 20 on the pile and lifts this one single sheet 20 off the top of the pile and places it onto a transparent plate 17 of a marker station 14. The marker station 14 is used to provide holes in the sheet 20, where the holes have well defined positions relatively to the graphics and can be used as orientation markers for the finishing the sheet 20 from the process side in the finishing station 8.

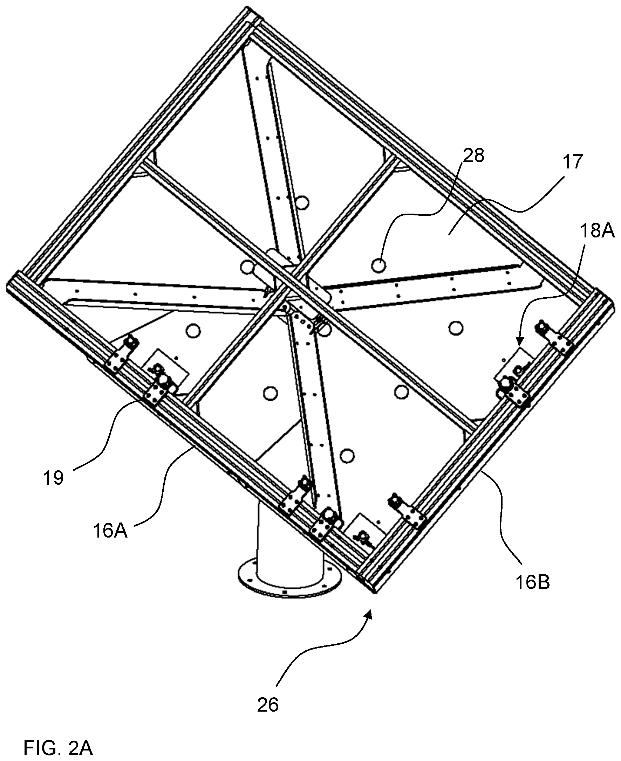

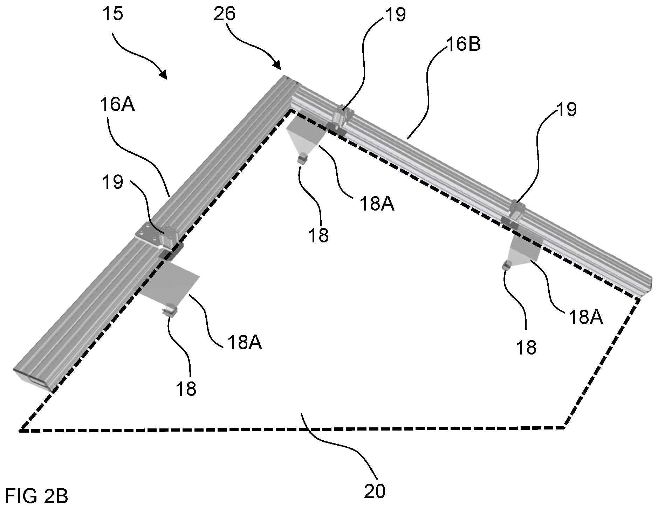

As indicated in FIG. 1 and further detailed in FIG. 2A and 2B, the marker station 14 comprises a frame 15 with two stationary straight profiles 16A, 16B mounted to a transparent plate 17, for example made of glass. The two straight profiled 16A, 16B and arranged perpendicular to each other, such as in an L-profile configuration. In the shown configuration of FIG. 1, the transparent plate 17 and the frame 15 are tilted so that sheets 20 can be dropped onto the transparent plate 17 and will slide by gravity on the transparent plate 17 until the edges of the sheet rest against the profiles 16A, 16B. Alternatively, the robot arm 7A may be equipped with sensors and place the sheet 20 with a gentle press against the transparent plane, and potentially also against the two straight profiles 16A, 16B.

FIG. 2A and the partial illustration 2B show the frame 15 with the profiles 16A, 16B in greater detail. The first straight profile 16A and the second straight profile 16B form a right angle at their mutual connection point 26. The frame 15 has attached to it a plurality of cameras 18 in stationary positions relatively to the frame 15. The cameras 18 are located below the transparent plate 17, which acts as support for the graphics sheet 20. For minimizing the risk for sliding of the graphics sheet on the plate due to trapped air between the graphics sheet 20 and the transparent plate 17, the transparent plate 17 is provided with some holes 28, which allow air to escape from the volume between the transparent plate 17 and the graphics sheet 20. The cameras 18 of the camera system are arranged with their lenses and field-of-view 18A directed towards the transparent plate 17 for imaging portions of the graphics sheet 20 when placed on the transparent plate 17. The number of cameras 18 could be another number than three, for example two or four cameras or more, or even only a single camera covering the graphics are with the markers 23 and the identifier 22. The frame 15 also comprises a plurality of hole making tools 19, for example punchers or drills, also mounted to the frame 15 in stationary position relatively to the frame 15. Important for simplicity is that each hole making tool 19 is stationary relatively to the cameras 18, which simplifies the setup, seeing that translation actuators can be avoided, and provides high accuracy without drift of moving parts.

FIG. 3 shows a non-limiting example of a sheet 20. For example, it is a cardboard with carries graphics 21, for example printed on the cardboard or provided on paper and/or plastic film glued to the cardboard. It comprise graphics 21 to be cut into four sections 21A, 21B, 21C, 21D. Additionally, it comprises an identifier 22, in particular, an optically readable two-dimensional code for a numeric or alphanumeric sequence. Examples of such optically readable codes comprise one dimensional sequences, such as bar codes, or two-dimensional sequences, such as matrix codes, an example of which is a QR code (Quick Response code) 22A or other type of fiducial 22B, for identifying the graphics 21 to be cut. Examples of useful fiducials 22B are disclosed in WO2017/144060A1.

Once, the identifier 22 has been read by one of the digital cameras 18, corresponding identifier data are transferred to a computer system (not shown), and the graphics 21 are identified in the computer system, which also has access to a set of data for a precise cutting curve, which is later used for cutting, once the orientation and position of the sheet 20 has been precisely determined in the finishing station 8.

Important is the problem of finding the correct orientation of the sheet 20 with its graphics 21 on the finishing station 8 so that the cutting curve, as stored in the computer system, indeed, matches the graphics 21 on the sheet 20. For this purpose, the sheet 20 also carries a plurality of printed reference markers 23, for example circles, rings, stars, or triangles, which are printed at predetermined locations on the graphics side. Preferably, the printed reference markers 23 are provided outside the graphics 21, for example, close to the edges of the graphics 21 and/or close to the edges of the graphics sheet 20, as illustrated.

Although, two printed reference markers 23 are in principle sufficient, three printed reference markers 23 on three different locations are preferred, or even more than three printed reference markers 23, in order for higher precision and redundancy in the event that one of the printed reference markers 23 should be difficult to detect or outside the field-of-view 18A of the respective camera 18.

For example, the sheet has a size of 120 cm x 100 cm or a size of 120 cm x 160 cm or a size somewhere in between. However, also larger sheets can be used, for example several meters along one or both of its edges.

Returning to FIG. 1 in combination with FIG. 2, the sheet 20 is taken from the sheet storage station 25 by the sheet supplier 7, illustrated as a robot arm 7A, and positioned on the transparent plate 17 of the marker station 14 with the graphics 21 downwards so that the cameras 18 can image portions of the graphics from below the transparent plate 17. In particular, the cameras 18 are arranged at positions on the frame 15 where the printed reference markers 23 are expected for an approximately correct position of the sheet 20. For example, the field-of-view 18A of the cameras 8 is 15 cm x 15 cm, which is large enough for finding the correct positions of one or more of the printed reference markers 23 within the field-of-view 18A of a respective one of the cameras 18, even if the sheet 20 is not positioned precisely.

A plurality of stationary hole making tools 19, for example hole punchers, provide holes in the sheet 20 outside the graphics 21. As the precise location of the printed reference markers 23 have been found by using the stationary cameras 18, and the precise stationary locations of the hole making tools 19 are known relatively to the position of the stationary cameras 18, also the precise position of the holes are known relatively to the printed reference markers 23. Accordingly, the marker station 14 has the purpose of providing holes as substitute reference markers that are readable from the process side on the basis of the printed reference markers that are only readable from the graphics side. Due to the hole making tools 19 having a precise location relatively to the cameras, there is a precise correlation between the printed reference markers 23 as read by the cameras 18 and the holes provided in the sheet 20 at the marker station 14.

As the printed reference markers 23 are precisely correlated to the computer-stored cutting curve, the position of the holes as new markers are also directly correlated to this cutting curve. For the further operation, the printed reference markers 23 are substituted by holes as new markers that are readable from both the graphics side and the opposite process side of the sheet 20. Accordingly, it suffices for the subsequent finishing process to read only the position of the holes by the further camera(s) 24 in the finishing station 8 and apply the modified cutting curve as received from the computer system, after taking into regard the position of the holes in the sheet 20. The cutting curve finally used in the finishing station 8 is a modified cutting curve, namely a mirror version of the original cutting curve as seen on the graphics side, and has been adjusted in the software to the position of the holes when the sheet 20 is placed on the finishing area 8A, 8B and the further camera system of the finishing station has detected the position of the holes.

Finishing tools 27 include creasing and cutting tools. Creasing is, typically, done using a creasing wheel or creasing shoe or by cutting a V-shaped trench using inclined cutting processes. These processes are done from the process side in order to avoid damaging the printed media and to create a fold which will both hold better when the product, such as a box, is formed, and give the final product a higher quality appearance.

### Reference numbers

1 process line for finishing graphics sheets 20, such as cutting and/or creasing
2 platform
3 transportation belt moving intermittently on the platform 2 for transport of sheets 20
4 first end of platform 2
5 second and of platform 2
6 receiving station at the first end 4
7 sheet supplier
7A a robot arm
8 finishing station
8A first finishing area
8B second finishing area
9A, 9B finishing arm holding finishing tools 27
10 removal station at the second end 5
11 intermediate storage station
12 robot arm
13 waste station
14 marker station
15 frame
16A, 16B straight profiles
17 transparent plate
18 camera
18A camera field-of-view
19 hole making tool
20 graphics sheet
21 graphics
21A, 21B, 21C, 21D sections of graphics 21
22 identifier
22A bar code
22B elongate fiducial
23 printed reference markers
24 further camera in the finishing area 8
25 sheet storage station
26 connection point of profiles 16A, 16B
27 finishing tools
28 holes in transparent plate 17

## Claims

1. A method for performing a finishing process of a graphics sheet (20), comprising:
- providing a sheet storage station (25);
- providing a graphics sheet (20) having a graphics side and an opposite process side, the graphics side bearing a graphics (21) and multiple printed reference markers (23) in predetermined positions relatively to the graphics and bearing a readable identifier (22);
- storing the graphics sheet (20) in the sheet storage station (25);
- providing a computer system comprising data for a predetermined finishing process of the graphics sheet (20), the predetermined finishing process being identified by the identifier (22) among multiple finishing processes, and the predetermined finishing process comprising at least one of cutting and creasing along one or more finishing curves in unique position-relationship to the printed reference markers (23);
- providing a marker station (14) that comprises a digital camera system (18) and a hole making system (19), moving the graphics sheet (20) from the sheet storage station (25) to the marker station (14) and positioning the printed reference markers (23) within the field-of-view (18A) of the digital camera system (18), determining positions of the printed reference markers (23) with the digital camera system (18) and registering the determined positions of the printed reference markers (23) in the computer system;
- reading the identifier (22) and submitting the read identifier (22) to the computer system, and on the basis of the read identifier (22), as received by the computer system, identifying the corresponding predetermined finishing process in the computer system;
- creating multiple holes through the graphics sheet (20) by the hole making system (19) and registering the position of the holes relatively to the positions of the printed reference markers (23) in the computer system;
- in the computer system, on the basis of the determined positions of the printed reference markers (23) and the read identifier (22), recalculating and modifying the one or more finishing curves into one or more modified finishing curves in unique position-relationship to the holes;
- moving the graphics sheet (20) from the marker station (14) to the finishing station (8), which is remote from the marker station (14), with the graphics side resting on a work pane and determining the position of the holes in the finishing station (8) with a further digital camera system (24) that is different from the digital camera system (18) and having its field-of-view towards the process side,
- receiving data for the one or more modified finishing curves by the finishing station (8) and, on the basis of the position of the holes in the finishing station (8), performing finishing process from the process side along the one or more modified finishing curves while the graphics side is resting on the work pane.

2. The method according to claim 1, wherein the hole making system comprises one or more hole making tools (19) arranged stationary at predetermined position relatively to the digital camera system (18).

3. The method according to claim 1 or 2, further comprising providing the marker station (14) with a transparent plate (17), and wherein the positioning of the graphics sheet (20) in the marker station (14) comprises a positioning of the graphics sheet (20) on the transparent plate (17) with the graphics side facing the transparent plate (17) and with a field-of-view (19A) of the digital camera system (18) through the transparent plate (17) onto the graphics side.

4. The method according to claim 3, further providing the marker station (14) with a frame (15), the frame (15) comprising a first straight profile (16A) and a second straight profile (16B) which form a right angle at their mutual connection point (26), wherein the transparent plate (17) is inclined with the connection point (26) at a position lower that a remaining portion of the transparent plate (17), and wherein the positioning of the graphics sheet (20) in the marker station (14) comprises a positioning of the graphics sheet (20) on the transparent plate (17) remotely from the connection point (26) and comprises a gravity-induced sliding of the graphics sheet (20) with one of its corners into the right angle at the connection point (26).

5. The method according to anyone of the preceding claims, wherein the digital camera system comprises multiple cameras (18) for the sensing of the printed registration markers (23), wherein all of the multiple cameras (18) are stationary and having field-of-views (18A) through the transparent plate (17), wherein the field-of-views (18) are not overlapping.

6. The method according to anyone of the preceding claims, wherein the method comprises providing a sheet storage station (25) in which the graphics sheets (20) are placed and gripping a graphics sheet (20) by a robot (7) having a robot arm (7A) with suction cups and moving the graphics sheet (20) by the robot (7) from the sheet storage station (25) to the marker station (14), and moving the graphics sheet (20), after having made holes in the graphics sheet (20), from the marker station (14) by the robot (7) onto a receiving station (6) on a platform (2) with the graphics side downwards, then, moving the graphics sheet (20) on the platform (2) from the receiving station (6) to the finishing station (8) and performing finishing in the finishing station (8), and finally moving the graphics sheet (20) to the removal station (10) and removing finished graphics (21) from the removal station (10).

7. The method according to claim 6, wherein the platform (2) comprises a transportation belt (3) and wherein the moving of the graphics sheet (20) from the receiving station (6) to the finishing station (8) and further to the removal station (11) is done by moving the transportation belt (3) on the platform, while the graphics sheet (20) is resting on the transportation belt (3).

8. The method according to claim 7, wherein the finishing station (8) has a first and a second finishing area (8A, 8B), each of which comprising a finishing arm (9A, 9B) holding and operating finishing tools (27), and wherein the method comprises providing holes in a first graphics sheet (20) in the marker station (14) and moving the first graphics sheet (20) from the marker station (14) to the receiving station (6) and then moving the first graphics sheet (20) by the transportation belt (3) from the receiving station to the first finishing area (8A), providing holes in a second graphics sheet (20) in the marker station (14) and moving the second graphics sheet (20) from the marker station (14) to the receiving station (6) and then moving the second graphics sheet (20) by the transportation belt (3) from the receiving station (6) to the first finishing area (8A) while simultaneously moving the first graphics sheet (20) from the first finishing area (8A) to the second finishing area (8B), and only then starting finishing process of the first graphics sheet (20) in the second finishing area (8B) and starting finishing of the second graphics sheet (20) in the first finishing area (8A).

9. A finishing system for a method according to any preceding claim, comprising:
- a sheet storage station (25) for storing a graphics sheet (20) prior to finishing, the sheet storage station (25) comprising a storage support with a support location for the graphics sheet (20);
- a marker station (14) comprising a hole making system for making multiple holes through the graphics sheet (20) at predetermined positions, the marker station (14) further comprising a digital camera system with at least one camera (18) oriented with a field of view (18A) towards a graphics side of the graphics sheet (20) and arranged for reading positions of printed reference markers (23) on the graphics side of the graphics sheet (20),
- a computer system with a database, having stored therein data for a predetermined finishing process of a graphics sheet (20), the finishing process comprising at least one of cutting and creasing along one or more finishing curves in unique position-relationship to printed reference markers (23) on the graphics sheet (20), wherein the computer system is digitally connected to the digital camera system for receiving and registering the read positions of the printed reference markers (23) in the computer system, wherein the computer system is programmed for recalculating and modifying the one or more finishing curves into one or more modified finishing curves in unique position-relationship to the positions of the multiple holes made in the graphics sheet (20) by the marker station (14);
- a finishing station (8) different and remote from the marker station (14) for performing finishing process on the graphics sheet (20) after the marker station (14), the finishing station (8) comprising a further digital camera system (24) different from the digital camera system (18) and directed with its field-of-view towards the process side and configured for providing positions data for the holes as read by the further digital camera system (24) from the process side, and wherein the finishing station (8) is digitally connected to the computer system and configured for transferring the read position data for the holes to the computer system and for receiving data for the one or more modified finishing curves, and configured for performing the finishing process with the received modified finishing curves.

10. The finishing system according to claim 9, wherein the hole making system comprises one or more hole making tools (19) arranged stationary at predetermined position relatively to the digital camera system (18).

11. The finishing system according to claim 9 or 10, wherein the marker station (14) comprises a transparent plate (17) for receiving the graphics sheet (20) with its graphics side onto the transparent plate (17), wherein the digital camera system comprises multiple cameras (18) that are stationary relatively to the transparent plate (17), wherein the cameras (18) having non-overlapping field-of-views (18A) through the transparent plate (17) for sensing the printed reference markers (23) on a graphics side of the graphics sheet (20).

12. The finishing system according to claim 9 or 10 or 11, wherein the marker station (14) comprises a frame (15) at the transparent plate (17), the frame (15) comprising a first straight profile (16A) and a second straight profile (16B) which form a right angle at their mutual connection point (26), wherein the transparent plate (17) is inclined with the connection point (26) at a position lower than a remaining portion of the transparent plate (17), for gravity-induced sliding of the graphics sheet (20) with one of its corners into the right angle at the connection point (26) when placed onto the transparent plate (17).

13. The finishing system according to anyone of the claims 9-12, further comprising a robot (7) with a robot arm (7A), the robot (7) being configured for moving the graphics sheet (20) sequentially from the storage station (25) to the marker station (14) and from the marker station (14) to a transportation belt (3) in a receiving station (6), wherein the transportation belt (3) is connected to the finishing station (8) for transport of the graphics sheet (20) from the receiving station (6) to the finishing station (8) and further from the finishing station (8) to a removal station (11) from which the finished graphics sheet (20) or portions thereof are removed after finishing.
